Europäisches Patentamt

European Patent Office

Office européen des brevets

(11) Veröffentlichungsnummer: **0 294 580**

**A1**

## (12) EUROPÄISCHE PATENTANMELDUNG

(21) Anmeldenummer: 88106753.2

(22) Anmeldetag: 27.04.88

(51) Int. Cl.⁴: **A47J 31/54**

(30) Priorität: 06.06.87 DE 8708083 U

(43) Veröffentlichungstag der Anmeldung:
14.12.88 Patentblatt 88/50

(84) Benannte Vertragsstaaten:
AT BE CH DE ES FR GB GR IT LI LU NL SE

(71) Anmelder: Melitta-Werke Bentz & Sohn K.G.
Ringstrasse 99
D-4950 Minden(DE)

(72) Erfinder: Ostermeier, Jürgen
Julianenweg 15
D-3062 Bückeburg(DE)

(74) Vertreter: Loesenbeck, Karl-Otto, Dipl.-Ing. et
al
Jöllenbecker Strasse 164
D-4800 Bielefeld 1(DE)

(54) Durchlauferhitzer für Kaffee- oder Teemaschinen.

(57) Der Durchlauferhitzer (10) umfaßt ein Wasserfüh-rungsrohr (11) sowie zwei elektrische Heizwiderstände (12), die im engen Kontakt zum Wasserführungsrohr (11) angeordnet sind und im eingeschalteten Zustand dieses Wasserführungsrohr (11) bzw. das durchfließende Wasser erhitzen.

Die untereinander gleichen Heizwiderstände (12) sind elektrisch in Reihe geschaltet und entweder einzeln oder gemeinsam einschaltbar.

Hierdurch ergibt sich die Möglichkeit, entweder die volle Leistung eines Heizwiderstandes (12) zu nutzen oder die Gesamtleistung zu halbieren.

Fig. 2

## Durchlauferhitzer für Kaffee- oder Teemaschinen

Die vorliegende Neuerung betrifft einen Durchlauferhitzer für Kaffee- oder Teemaschinen, bestehend aus einem mittels eines Heizaggregates in unterschiedlichen Leistungsstufen beheizbaren Wasserführungsrohr.

Durchlauferhitzer der gattungsgemäßen Art sind ansich bekannt.

Bei den bekannten Konstruktionen wird üblicherweise zur Veränderung der Leistungsstufen eine Diode verwendet, um die Heizleistung des Heizaggregates bei geringen Brühwassermengen um die Hälfte zu reduzieren.

Der vorliegenden Neuerung liegt die Aufgabe zugrunde, einen Durchlauferhitzer der gattungsgemäßen Art zu schaffen, der problemlos und in elektrotechnischer Hinsicht völlig unbedenklicher Art und Weise mit voller oder mit halber Leistung betreibbar ist.

Diese Aufgabe wird neuerungsgemäß dadurch gelöst, daß das Heizaggregat aus zwei gleichen, elektrischen Heizwiderständen besteht, welche in Reihenschaltung einzeln oder gemeinsam einschaltbar sind.

Durch die neuerungsgemäße Konstruktion wird der bei der Verwendung von Dioden zur Halbierung der Leistung auftretende, unerwünschte Gleichstromanteil vermieden.

Eine exakte Halbierung der Heizleistung ist durch die Verwendung zweier gleicher elektrischer Heizwiderstände in Reihenschaltung gewährleistet.

Ein Ausführungsbeispiel der Neuerung ist in den beigefügten Zeichnungen dargestellt und wird im folgenden näher beschrieben. Es zeigen:

Fig. 1 eine Draufsicht auf einen neuerungsgemäßen Durchlauferhitzer

Fig. 2 einen Teilschnitt nach der Linie II-II in Fig. 1, dargestellt mit einer oberhalb des Durchlauferhitzer angeordneten Warmhalteplatte

Fig. 3 das Schaltbild des Durchlauferhitzer gem. den Fig. 1 und 2

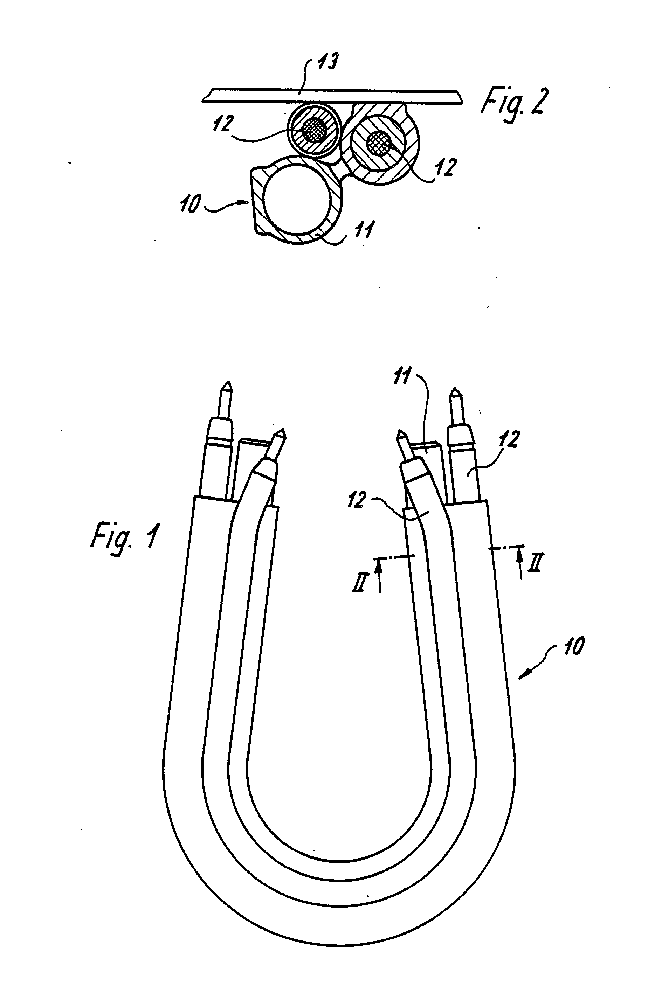

Der in Fig. 1 ingesamt mit dem Bezugszeichen 10 versehene Durchlauferhitzer umfaßt ein Wasserführungsrohr 11 sowie zwei elektrische Heizwiderstände 12, die im engen Kontakt zum Wasserführungsrohr 11 angeordnet sind und im eingeschalteten Zustand dieses Wasserführungsrohr 11 bzw. das durchfließende Wasser erhitzen.

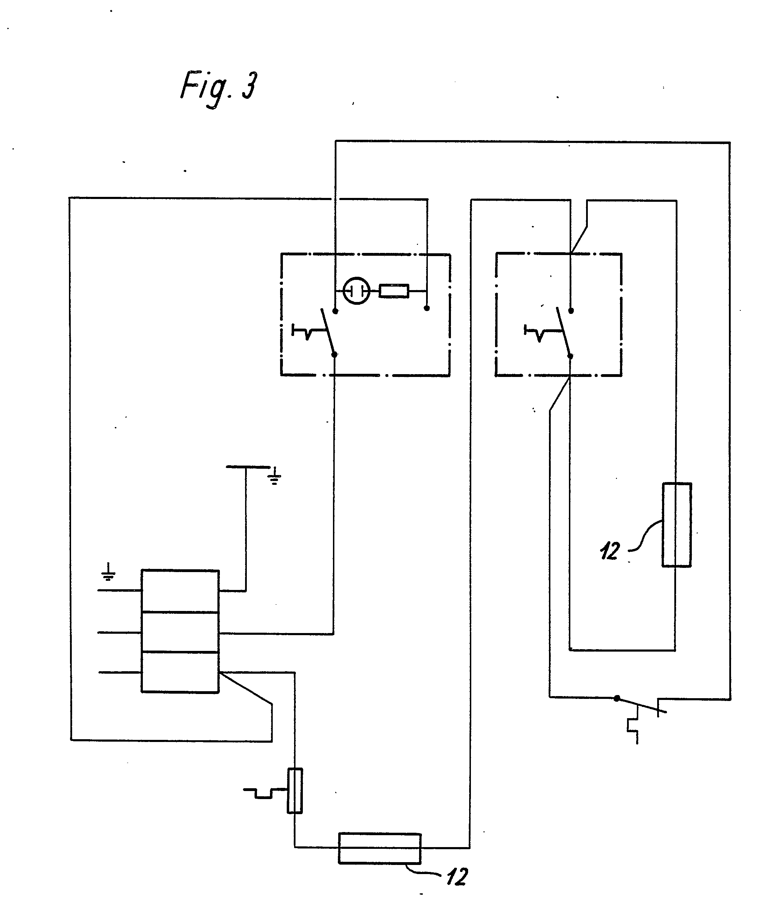

Die untereinander gleichen Heizwiderstände 12 sind, wie sich aus Fig. 3 ergibt, elektrisch in Reihe geschaltet entweder einzeln oder gemeinsam einschaltbar.

Dadurch ergibt sich die Möglichkeit, entweder die volle Leistung eines Heizwiderstandes 12 zu nutzen oder die Gesamtleistung zu halbieren.

Wie Fig. 2 deutlich macht, ist der Durchlauferhitzer 10 insgesamt unterhalb einer Warmhalteplatte 13 angebracht, sodaß mittels der Heizwiderstände 12 auch die Warmhalteplatte 13 beheizbar ist.

Der Vorteil dieser Anordnung ist, daß ohne Gestaltänderung des bekannten Durchlauferhitzers 10, die Zuordnung eines zweiten Heizaggregates 12 möglich ist.

## Ansprüche

1. Durchlauferhitzer für Kaffee- oder Teemaschinen, bestehend aus einem mittels eines Heizaggregates in unterschiedlichen Leistungsstufen beheizbaren Wasserführungsrohr, **dadurch gekennzeichnet,** daß das Heizaggregat aus zwei gleichen, elektrischen Heizwiderständen (12) besteht, welche in Reihenschaltung einzeln oder gemeinsam einschaltbar sind.

2. Durchlauferhitzer nach Anspruch 1, dadurch gekennzeichnet, daß die beiden Heizwiderstände (12) an dem Wasserführungsrohr (11) anliegen bzw. dieses engen Berührungskontakt hat.

Fig. 2

Fig. 1

Melitta

# Fig. 3

12

12

Melitta

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 839 140 (KRUPS) <br> * Insgesamt * <br> --- | 1 | A 47 J 31/54 |
| X | FR-A-2 322 334 (ELPAG AG) <br> * Seite 4, Zeilen 4-11; Figur 2 * <br> --- | 1,2 | |
| X | GB-A-2 079 421 (ROWENTA) <br> * Insgesamt * <br> --- | 1 | |
| X | US-A-3 953 923 (RYGMYR) <br> * Insgesamt * <br> --- | 1,2 | |
| X | DE-A-2 942 523 (HILLINGER) <br> * Insgesamt * <br> --- | 1,2 | |
| X | DE-U-8 516 331 (SIEMENS AG) <br> * Insgesamt * <br> --- | 1,2 | |
| X | DE-A-2 701 692 (CERU) <br> * Seite 7; Figur 4 * <br> --- | 1,2 | |
| X | DE-C-3 419 365 (MELITTA) <br> * Anspruch 6 * <br> ----- | 1,2 | **RECHERCHIERTE SACHGEBIETE (Int. Cl.4)** <br><br> A 47 J |

Der vorliegende Recherchenbericht wurde für alle Patentansprüche erstellt

| Recherchenort | Abschlußdatum der Recherche | Prüfer |
|---|---|---|
| DEN HAAG | 29-08-1988 | SCHARTZ J. |